# EUROPEAN PATENT APPLICATION

(11) **EP 2 461 141 A1**
(43) Date of publication of application: **06.06.2012**
(21) Application number: 10193540.1
(22) Date of filing: 02.12.2010
(51) Int. Cl.: G01F 15/10, G01F 15/14

(54) **A device to at least partially enclose a flow meter**

(71) Applicant: Acair Tactha Teoranta, Co. Waterford (IE)
(72) Inventor: Ó Faoláin, Michéal, 00, Dungarvan (IE)
(74) Representative: Reedy, Orlaith

(57) **Abstract**

A device (2) to enclose a water flow meter (3) comprises a base (9), an inlet element (7), an outlet element (8), a lower wall (10), an intermediate wall (11), and an upper wall (12). The device (2) comprises an opening (15) in the base (9), and an elongate rod (14). The opening (15) facilitates drainage of fluid from the interior of the device (2). The rod (14) may be employed to close the opening (15). The inlet element (7) receives an inlet flow of water into the device (2), and the outlet element (8) delivers an outlet flow of water from the device (2). Each of the inlet element (7) and the outlet element (8) is pivotably movable relative to the base (9) by at least 30 degrees. The intermediate wall (11) is movable relative to the lower wall (10) and the upper wall (12) is movable relative to the intermediate wall (11) to selectively adjust the internal volume of the device (2). Each of the lower wall (10), the intermediate wall (11), and the upper wall (12) is circular in cross section.

## Description

### Introduction

This invention relates to a device to at least partially enclose a flow meter.

### Statements of Invention

According to the invention there is provided a device to at least partially enclose a flow meter, the device comprising an inlet element to receive an inlet flow, and an outlet element to deliver an outlet flow.

By enclosing the flow meter, the flow meter may be protected from environmental conditions.

In one embodiment of the invention the device comprises a main body part, and the inlet element is movable relative to the main body part. This arrangement provides the device with a degree of adjustability to mate the inlet element with an external member which is delivering the inlet flow to the inlet element. Preferably the inlet element is pivotably movable relative to the main body part. Ideally the inlet element is pivotably movable by at least 30 degrees. Most preferably the inlet element is pivotably movable by at least 60 degrees. The inlet element may be pivotably movable by at least 90 degrees. The inlet element may be pivotably movable by at least 120 degrees. The inlet element may be pivotably movable by at least 150 degrees. The inlet element may be pivotably movable by approximately 180 degrees. Preferably the inlet element is movable relative to the main body part in a single plane. Ideally the device comprises a main body part, and the outlet element is movable relative to the main body part. This arrangement provides the device with a degree of adjustability to mate the outlet element with an external member which is receiving the outlet flow from the outlet element. Most preferably the outlet element is pivotably movable relative to the main body part. The outlet element may be pivotably movable by at least 30 degrees. Preferably the outlet element is pivotably movable by at least 60 degrees. Ideally the outlet element is pivotably movable by at least 90 degrees. The outlet element may be pivotably movable by at least 120 degrees. The outlet element may be pivotably movable by at least 150 degrees. The outlet element may be pivotably movable by approximately 180 degrees. Most preferably the outlet element is movable relative to the main body part in a single plane. The plane of movement of the inlet element may be substantially parallel to the plane of movement of the outlet element.

In another embodiment the internal volume of the device is selectively adjustable. In this manner the device may be used in a variety of circumstances. For example in the case where the device is intended to be inserted into an excavated hole in the ground, the device may be adjusted to suit the size of the excavated hole before inserting into the excavated hole. Preferably the internal volume of the device is selectively adjustable in a telescoping manner. Ideally the device comprises a first wall member and a second wall member, the first wall member being movable relative to the second wall member. Most preferably the first wall member at least partially overlaps the second wall member. The first wall member may be located radially outwardly of the second wall member. The first wall member may be an upper wall member and the second wall member may be a lower wall member, with at least part of the first wall member being configured to be located above the second wall member. The first wall member may be a lower wall member and the second wall member may be an upper wall member, with at least part of the first wall member being configured to be located below the second wall member.

In one case the device comprises means to drain fluid from the interior of the device. By draining fluid from the interior of the device, this results in a cleaner and easier to operate working environment within the interior of the device. By draining fluid from the interior of the device, this minimises the possibility of damage to the flow meter. Preferably the means to drain fluid comprises an opening. Ideally the device comprises means to selectively prevent drainage of fluid from the interior of the device. Most preferably the means to selectively prevent drainage comprises means to at least partially close the opening.

In another case the device is substantially circular in cross section. Preferably the radial dimension of the device is at least 100 mm. Ideally the radial dimension of the device is at least 125 mm. Most preferably the radial dimension of the device is at least 150 mm. The radial dimension of the device may be at least 175 mm. A variety of types of flow meter may be used with the device.

The device may comprise means to indicate the location of the device. The device may comprise means to indicate the location of the device by magnetic means. At least part of the indicating means may be of a metallic material. The indicating means may be mounted to a wall member of the device. The indicating means may be mounted to a cap member of the device.

In one embodiment the invention provides a device to at least partially enclose a water flow meter.

The invention also provides in another aspect a flow meter system comprising:
a flow meter, and
a device to at least partially enclose the flow meter of the invention.

In one embodiment of the invention the flow meter is located at least partially within the interior of the device.

### Brief Description of the Drawings

The invention will be more clearly understood from the following description of some embodiments thereof, given by way of example only, with reference to the accompanying drawings, in which:
Fig. 1 is an isometric view from above of a device to at least partially enclose a flow meter according to the invention in an expanded configuration,
Fig. 2 is an isometric view from below of part of the device of Fig. 1,
Fig. 3 is an isometric view from above of the device of Fig. 1 in a collapsed configuration,
Figs. 4 and 5 are cut-away isometric views from above of the device of Fig. 1 in the expanded configuration,
Fig. 6 is a cut-away isometric view from below of the device of Fig. 1 in the expanded configuration,
Fig. 7 is a cut-away isometric view from above of another device to at least partially enclose a flow meter according to the invention in an expanded configuration,
Fig. 8 is a cross-sectional side view of the device of Fig. 7 in the expanded configuration,
Fig. 9 is a cut-away isometric view from above of another device to at least partially enclose a flow meter according to the invention in an expanded configuration,
Fig. 10 is a cut-away isometric view from above of part of the device of Fig. 9,
Fig. 11 is an isometric view from below of another device to at least partially enclose a flow meter according to the invention in an expanded configuration,
Fig. 12 is an isometric view from above of part of the device of Fig. 11,
Fig. 13 is an assembled isometric view from above of part of another device to at least partially enclose a flow meter according to the invention in an expanded configuration, and
Fig. 14 is an exploded isometric view from above of part of the device of Fig. 13.

### Detailed Description

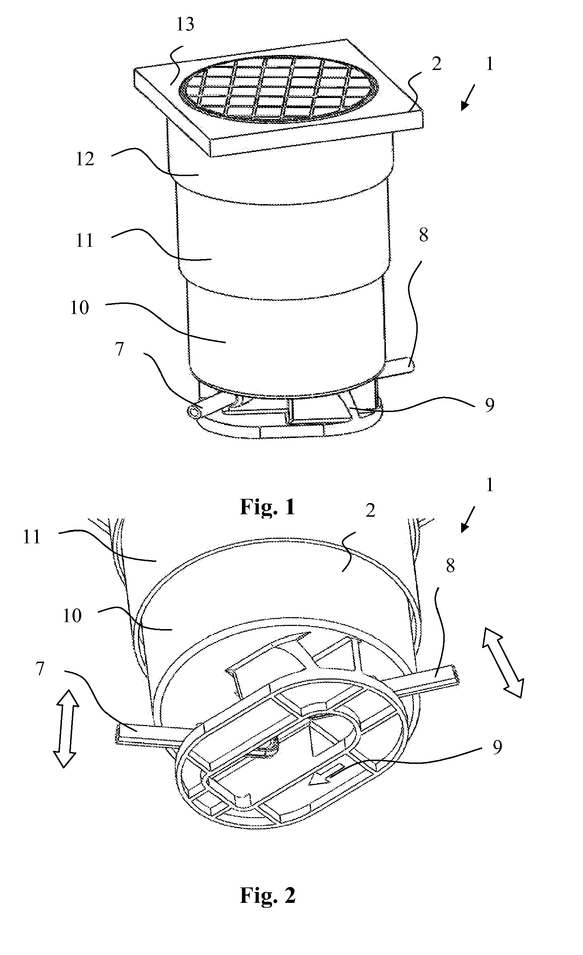

Referring to the drawings, and initially to Figs. 1 to 6 thereof, there is illustrated a flow meter system 1 according to the invention. In this case the system 1 comprises a water flow meter system.

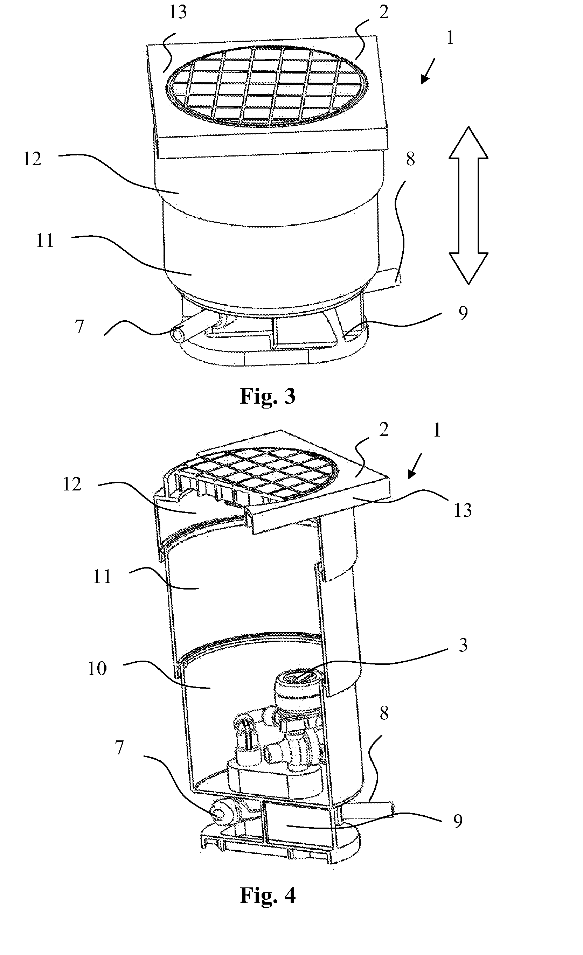

The water flow meter system 1 comprises a water flow meter 3, and a device 2 to fully enclose the water flow meter 3 (Fig. 4).

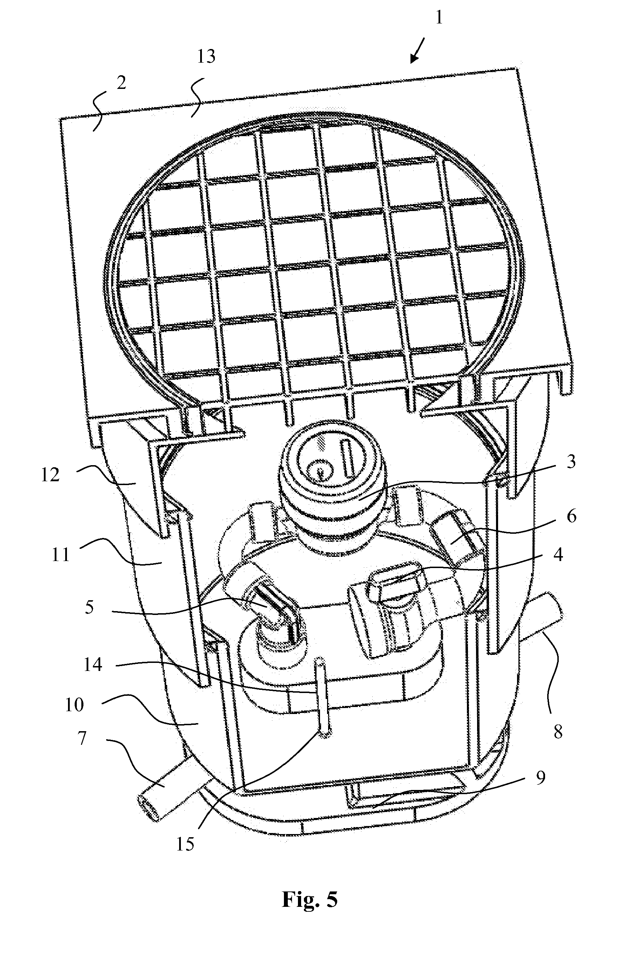

The water flow meter 3 is located fully within the interior of the device 2. The device 2 acts as a housing for the water pump meter 3. In this case the water flow meter 3 comprises a non-return valve 6, a rotary elbow push fitting 5, and an on/off valve 4 (Fig. 5). Water may flow along a curved flow path in a single plane from the rotary elbow push fitting 5 through the non-return valve 6 to the on/off valve 4.

The device 2 comprises a base 9, an inlet element 7, an outlet element 8, a lower wall 10, an intermediate wall 11, an upper wall 12, and a cap 13 (Fig. 1).

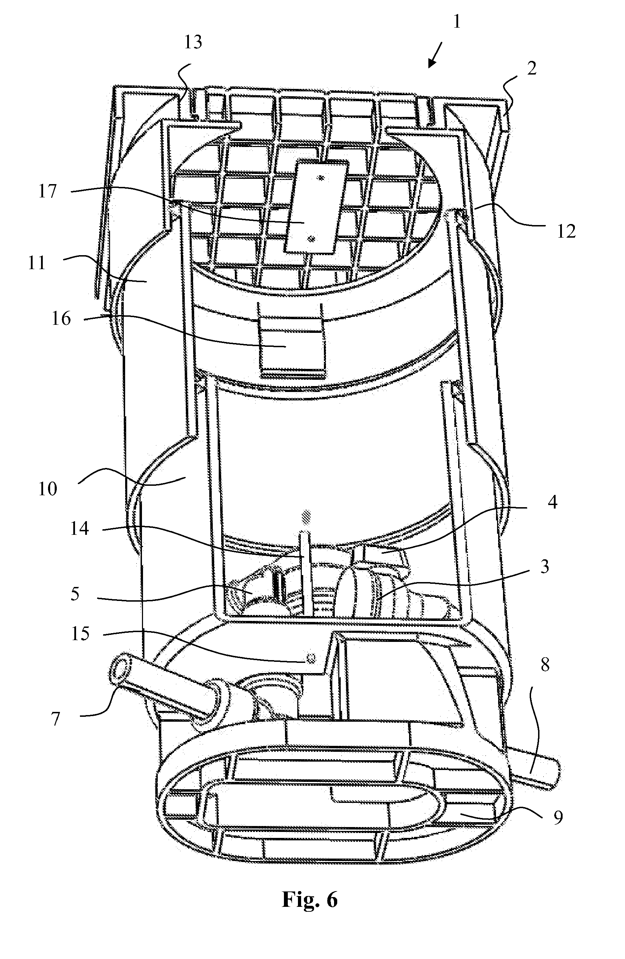

The device 2 comprises an opening 15 in the base 9, and an elongate rod 14 (Fig. 6). The opening 15 facilitates drainage of fluid from the interior of the device 2. The rod 14 may be employed to fully close the opening 15 to selectively prevent drainage of fluid from the interior of the device 2.

The inlet element 7 receives an inlet flow of water into the device 2, and the outlet element 8 delivers an outlet flow of water from the device 2. The inlet element 7 is connected in fluid communication with the rotary elbow push fitting 5 of the water flow meter 3. Similarly the on/off valve 4 of the water flow meter 3 is connected in fluid communication with the outlet element 8. In this case the inlet element 7 is provided in the form of a cylindrical pipe, and the outlet element 8 is provided in the form of a cylindrical pipe.

The inlet element 7 is pivotably movable relative to the base 9 in a single plane by at least 30 degrees (Fig. 2). Preferably the inlet element 7 is pivotably movable relative to the base 9 by at least 60 degrees. In this case the inlet element 7 is pivotably movable relative to the base 9 by at least 90 degrees.

Similarly the outlet element 8 is pivotably movable relative to the base 9 in a single plane by at least 30 degrees (Fig. 2). Preferably the outlet element 8 is pivotably movable relative to the base 9 by at least 60 degrees. In this case the outlet element 8 is pivotably movable relative to the base 9 by at least 90 degrees. The swivel angle at both the inlet 7 and the outlet 8 is greater than 90 degrees. The plane of movement of the inlet element 7 is parallel to and co-planar with the plane of movement of the outlet element 8.

The intermediate wall 11 overlaps the lower wall 10, with the intermediate wall 11 being located radially outwardly of the lower wall 10 (Fig. 4). Part of the intermediate wall 11 is located above the lower wall 10 (Fig. 4). The intermediate wall 11 is movable relative to the lower wall 10 to selectively adjust the internal volume of the device 2 in a telescoping manner between an expanded configuration (Fig. 1) and a collapsed configuration (Fig. 3).

Similarly the upper wall 12 overlaps the intermediate wall 11, with the upper wall 12 being located radially outwardly of the intermediate wall 11 (Fig. 4). Part of the upper wall 12 is located above the intermediate wall 11 (Fig. 4). The upper wall 12 is movable relative to the intermediate wall 11 to selectively adjust the internal volume of the device 2 in a telescoping manner between the expanded configuration (Fig. 1) and the collapsed configuration (Fig. 3).

Each of the lower wall 10, the intermediate wall 11, and the upper wall 12 is circular in cross section (Fig. 4). The radius of the lower wall 10 is at least 100 mm. Preferably the radius of the lower wall 10 is at least 125 mm. Ideally the radius of the lower wall 10 is at least 150 mm. In this case the radius of the lower wall 10 is at least 175 mm. The relatively large internal volume of the device 2 may accommodate a variety of different types of water flow meters.

The cap 13 is rotatable relative to the upper wall 12. The cap 13 is releasably attached to the upper wall 12, for example by means of a strap element 16 (Fig. 6). The strap element 16 may be of any suitable material such as a polymeric material.

The device 2 comprises means to indicate the location of the device 2 by magnetic means, for example a plate 17 of a metallic material attached to the cap 13 (Fig. 6). The plate 17 may be employed to assist in locating the device 2 by magnetic means, for example when the cap 13 of the device 2 is covered over when the device 2 is in the ground.

In further detail, Fig. 1 illustrates the unit 2 extended to the upper position.

Fig. 2 illustrates the boundary box 2 for the water meter 3. Fig. 2 illustrates the inlet pipe 7 and the outlet pipe 8. Fig. 2 illustrates that the outlet pipe 8 and the inlet pipe 7 are free to rotate to enable ease of fitting once the device 2 is inserted into a hole in the ground. In particular the inlet and outlet pipes 7, 8 do not clash with the wall of the base housing 9.

Fig. 3 illustrates the unit 2 collapsed to the lower position.

Fig. 4 illustrates that the lid housing 13 is rotatable, and that the telescopic design includes rubber seals.

Fig. 5 illustrates the water meter 3, the non return valve 6, the rotary elbow push fitting 5, the on/off valve 4, and the removable pull-out rubber water bung 14 to drain the unit 2 during inspection or installation.

Fig. 6 illustrates the metal plate 17 for later detection if the unit 2 is covered in service. The lid 13 is secured to the unit wall 12 with the plastic strap 16.

In use, the water flow meter 3 is located fully within the interior of the device 2, and the device 2 is inserted into an excavated hole in the ground.

The inlet element 7 is connected in fluid communication with a source of the inlet flow of water. The inlet element 7 is pivotably moved relative to the base 9 as required. Similarly the outlet element 8 is connected in fluid communication with a destination for the outlet flow of water. The outlet element 8 is pivotably moved relative to the base 9 as required.

The intermediate wall 11 is moved relative to the lower wall 10, and the upper wall 12 is moved relative to the intermediate wall 11 as required to selectively adjust the internal volume of the device 2 in a telescoping manner to a desired configuration between the expanded configuration (Fig. 1) and the collapsed configuration (Fig. 3).

Water flows from the source of the inlet flow of water, through the inlet element 7, along a curved flow path in a single plane from the rotary elbow push fitting 5 through the non-return valve 6 to the on/off valve 4, through the outlet element 8, to the destination for the outlet flow of water.

The rod 14 is removed from the opening 15 to facilitate drainage of fluid from the interior of the device 2 as required. The rod 14 is then replaced in the opening 15 to fully close the opening 15 to selectively prevent drainage of fluid from the interior of the device 2.

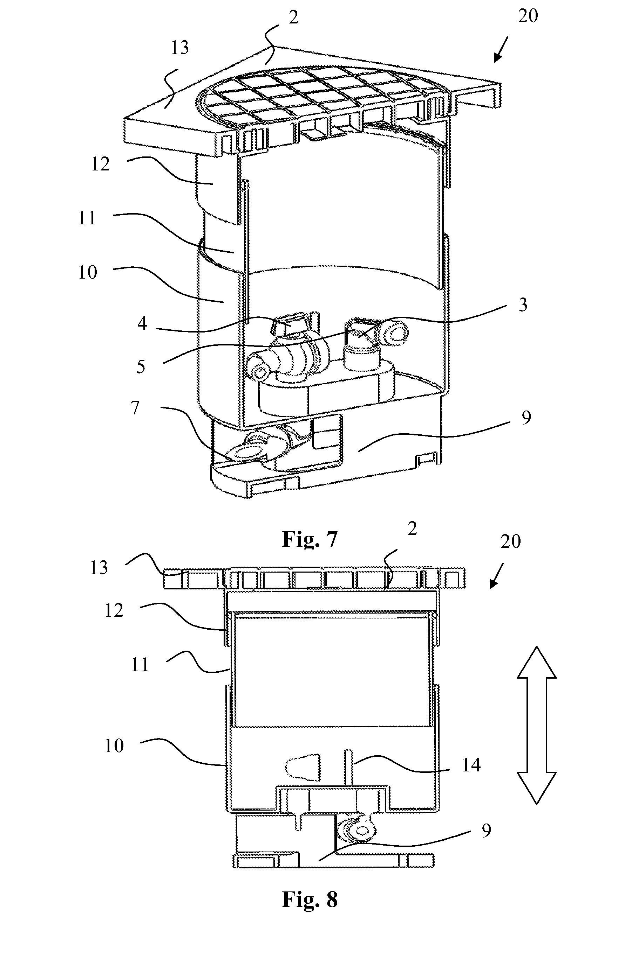

In Figs. 7 and 8 there is illustrated another water flow meter system 20 according to the invention, which is similar to the water flow meter system 1 of Figs. 1 to 6, and similar elements in Figs. 7 and 8 are assigned the same reference numerals.

In this case the lower wall 10 overlaps the intermediate wall 11, with the lower wall 10 being located radially outwardly of the intermediate wall 11 (Fig. 7). Part of the intermediate wall 11 is located above the lower wall 10 (Fig. 7). The intermediate wall 11 is movable relative to the lower wall 10 to selectively adjust the internal volume of the device 2 in a telescoping manner between the expanded configuration and the collapsed configuration.

Fig. 7 illustrates the internal telescoping with the collapsible telescopic feature on the inside as opposed to the outside.

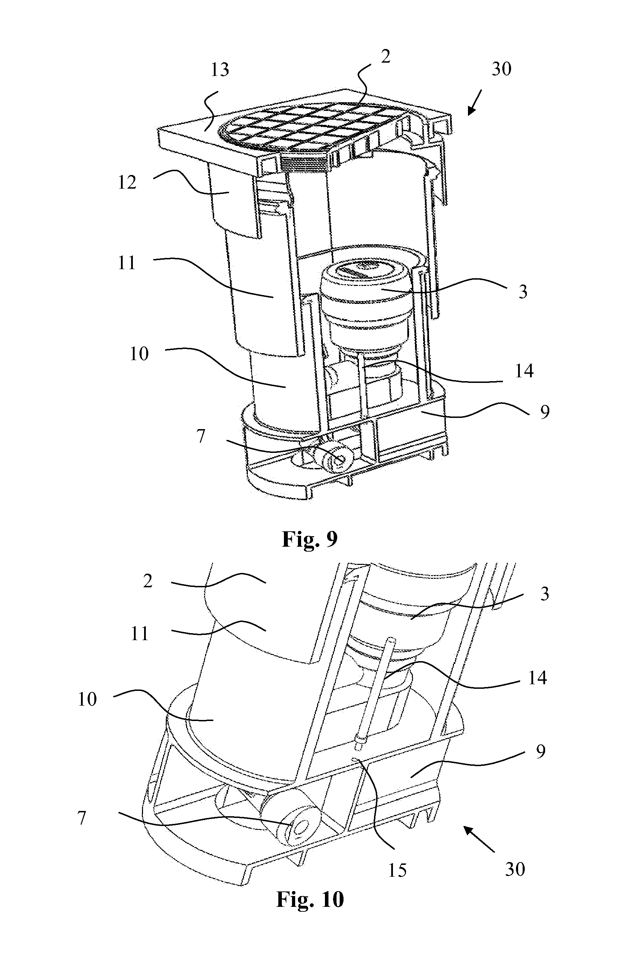

Figs. 9 and 10 illustrate a further water flow meter system 30 according to the invention, which is similar to the water flow meter system 1 of Figs. 1 to 6, and similar elements in Figs. 9 and 10 are assigned the same reference numerals.

In this case each of the lower wall 10, the intermediate wall 11, and the upper wall 12 is non-circular in cross section (Fig. 9). In particular the cross section of each of the lower wall 10, the intermediate wall 11, and the upper wall 12 comprises two semicircular end parts separated by two flat side walls.

Fig. 9 illustrates the rubber water bung 14 which may be removed during operation or installation to remove water from the unit 2. Fig. 9 illustrates the lid 13 and the lid housing, the base 9 of the unit 2, the water meter 3, the on/off valve 4, the water bung 14, with the base 9 to allow rotation of both the inlet and outlet push fit elbows 7, 8.

Fig. 10 illustrates the base 9 of the unit 2.

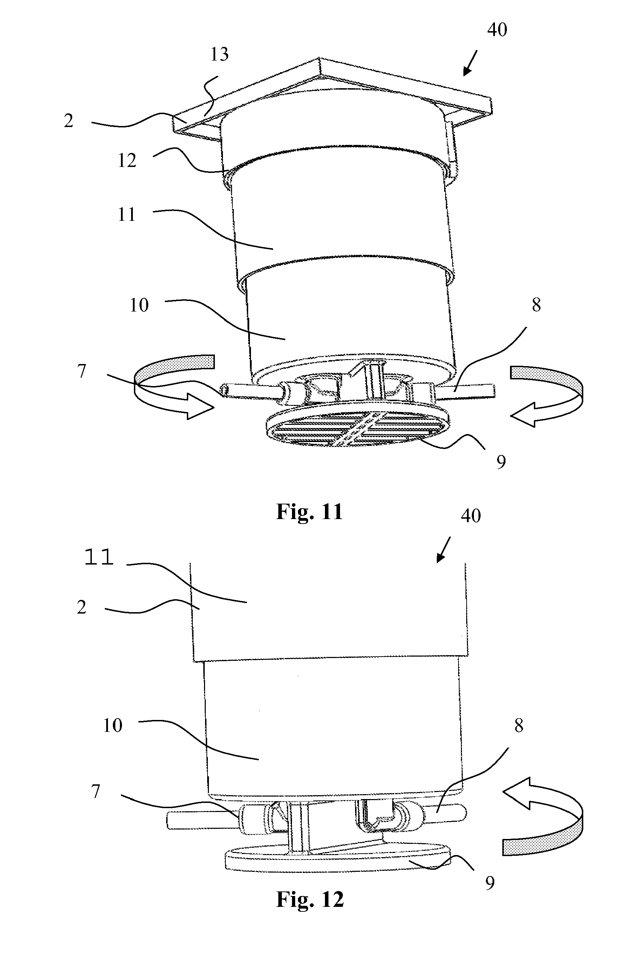

Referring to Figs. 11 and 12 there is illustrated another water flow meter system 40 according to the invention, which is similar to the water flow meter system 1 of Figs. 1 to 6, and similar elements in Figs. 11 and 12 are assigned the same reference numerals.

In this case the inlet element 7 is pivotably movable relative to the base 9 in a single plane by at least 120 degrees. Preferably the inlet element 7 is pivotably movable relative to the base 9 by at least 150 degrees. In this case the inlet element 7 is pivotably movable relative to the base 9 by approximately 180 degrees.

Similarly the outlet element 8 is pivotably movable relative to the base 9 in a single plane by at least 120 degrees. Preferably the outlet element 8 is pivotably movable relative to the base 9 by at least 150 degrees. In this case the outlet element 8 is pivotably movable relative to the base 9 by approximately 180 degrees.

Fig. 11 illustrates the base 9 of the unit 40 with more flexibility for both the inlet and outlet pipes 7, 8 to rotate. With this design they can rotate to 180 degrees which will give the user more flexibility when installing the unit 40 in the field.

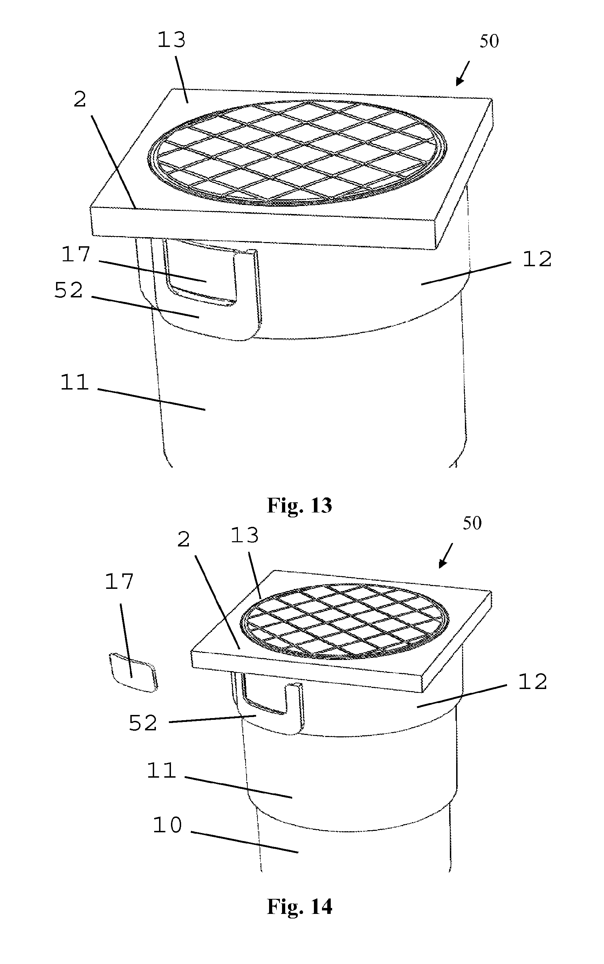

In Figs. 13 and 14 there is illustrated another water flow meter system 50 according to the invention, which is similar to the water flow meter system 1 of Figs. 1 to 6, and similar elements in Figs. 13 and 14 are assigned the same reference numerals.

In this case the plate 17 of metallic material is releasably mounted to the upper wall 12 by means of a mounting bracket 52.

Fig. 13 illustrates the metal tab 17 secured to the side 12 of the unit 50 to enable the unit 50 to be detected in the event that the lid 13 is missing. Fig. 13 shows the unit 50 with the metal tab 17 in position. Fig. 14 shows the unit 50 without the metal tab 17 inserted, for example during a production stage.

It will be appreciated that the flow meter system of the invention may be employed in a variety of possible applications. For example the flow meter may comprise a gas flow meter, and/or an oil flow meter, and/or an electricity supply flow meter, and/or an air conditioning supply flow meter. The device 2 may be employed to fully enclose the gas flow meter, and/or the oil flow meter, and/or the electricity supply flow meter, and/or the air conditioning supply flow meter.

The invention is not limited to the embodiments hereinbefore described, with reference to the accompanying drawings, which may be varied in construction and detail.

## Claims

1. A device to at least partially enclose a flow meter, the device comprising an inlet element to receive an inlet flow, and an outlet element to deliver an outlet flow.

2. A device as claimed in claim 1 wherein the device comprises a main body part, and the inlet element is movable relative to the main body part.

3. A device as claimed in claim 2 wherein the inlet element is pivotably movable relative to the main body part.

4. A device as claimed in claim 3 wherein the inlet element is pivotably movable by at least 30 degrees.

5. A device as claimed in any of claims 1 to 4 wherein the internal volume of the device is selectively adjustable.

6. A device as claimed in claim 5 wherein the device comprises a first wall member and a second wall member, the first wall member being movable relative to the second wall member.

7. A device as claimed in claim 6 wherein the first wall member is located radially outwardly of the second wall member.

8. A device as claimed in claim 6 or 7 wherein the first wall member is an upper wall member and the second wall member is a lower wall member, with at least part of the first wall member being configured to be located above the second wall member.

9. A device as claimed in claim 6 or 7 wherein the first wall member is a lower wall member and the second wall member is an upper wall member, with at least part of the first wall member being configured to be located below the second wall member.

10. A device as claimed in any of claims 1 to 9 wherein the device comprises means to drain fluid from the interior of the device.

11. A device as claimed in claim 10 wherein the device comprises means to selectively prevent drainage of fluid from the interior of the device.

12. A device as claimed in any of claims 1 to **11** wherein the device is substantially circular in cross section.

13. A device as claimed in any of claims 1 to 12 wherein the radial dimension of the device is at least 100 mm.

14. A device to at least partially enclose a water flow meter as claimed in any of claims 1 to 13.

15. A flow meter system comprising:
a flow meter, and
a device to at least partially enclose the flow meter as claimed in any of claims 1 to 14.
